# EUROPEAN PATENT APPLICATION

(11) **EP 3 372 477 A1**
(43) Date of publication of application: **12.09.2018**
(21) Application number: 18154757.1
(22) Date of filing: 01.02.2018
(51) Int. Cl.: B62D 25/02, B62D 25/06

(54) **VEHICLE UPPER SECTION STRUCTURE**

(30) Priority: 09.03.2017 JP 2017045381
(71) Applicant: TOYOTA JIDOSHA KABUSHIKI KAISHA, Toyota-shi, Aichi-ken, 471-8571 (JP)
(72) Inventor: KAGAMI, Ayaka, Aichi-ken, 471-8571 (JP); SHIMIZU, Kazuki, Aichi-ken, 471-8571 (JP)
(74) Representative: J A Kemp

(57) **Abstract**

A vehicle upper section structure includes a roof side-rail, a roof panel, and a side outer panel. The roof side-rail is provided at a vehicle width direction end of a vehicle upper section. The roof panel is formed from a material having a higher linear expansion coefficient than that of a material of the roof side-rail, and is provided at a vehicle width direction central portion of the vehicle upper section. The side outer panel is formed from a material having a higher linear expansion coefficient than that of the material of the roof side-rail, is provided at an outer side of a vehicle further than the roof side-rail, and includes a first join joined to the roof side-rail and a second join joined to the roof panel. The first join and the second join are separated from each other.

## Description

### BACKGROUND

### Technical Field

The present disclosure relates to a vehicle upper section structure.

In the vehicle body member joining structure described in Japanese Patent No. 4273922, joining faces of an aluminum roof panel and a steel side roof-rail are joined together by non-penetrating rivets, with structural adhesive interposed between the joining faces. Further, a bead extending along the joining faces is formed at a vehicle width direction end of the aluminum roof panel. Strain that arises as a result of joining dissimilar metals is thereby absorbed.

However, in the above structure, sufficient strength and rigidity cannot be secured with respect to strain occurring in the roof panel as a result of the different linear expansion coefficients between aluminum and steel when the bead has a shallow profile, and the roof panel undergoes plastic deformation. On the other hand, there is a negative impact on styling when the bead has a deep profile. In particular, there is a tendency for users of luxury cars, low sports cars, and the like not to want beads to be formed at vehicle width direction ends of roof panels.

### SUMMARY

In consideration of the above circumstances, the present disclosure provides a vehicle upper section structure capable of preventing or effectively suppressing plastic deformation in a roof panel, even in cases in which a bead is not formed to a vehicle width direction end of a roof panel in a configuration in which a roof panel is formed from a material having a higher linear expansion coefficient than that of a roof side-rail.

A vehicle upper section structure of a first aspect of the present disclosure includes a roof side-rail, a roof panel, and a side outer panel. The roof side-rail is provided at a vehicle width direction end of a vehicle upper section. The roof panel is formed from a material having a higher linear expansion coefficient than that of a material of the roof side-rail, and is provided at a vehicle width direction central portion of the vehicle upper section. The side outer panel is formed from a material having a higher linear expansion coefficient than that of the material of the roof side-rail, is provided at an outer side of a vehicle further than the roof side-rail, and includes a first join joined to the roof side-rail and a second join joined to the roof panel, The first join and the second join being separated from each other.

In the first aspect, the roof panel and the side outer panel are each formed from a material having a higher linear expansion coefficient than the material of the roof side-rail. The side outer panel includes the first join joined to the roof side-rail and the second join joined to the roof panel, with the first join and the second join being separated from each other. Namely, the roof panel is connected to the roof side-rail indirectly through the side outer panel. This enables strain occurring in the roof panel due to such differences in linear expansion coefficients to be absorbed by the side outer panel. This enables plastic deformation in the roof panel to be prevented or effectively suppressed even in cases in which a bead, such as that described in BACKGROUND, is not formed at the vehicle width direction end of the roof panel.

A vehicle upper section structure of a second aspect of the present disclosure is the first aspect, wherein the roof panel and the side outer panel are formed from the same type of light alloy.

In the second aspect, the roof panel and the side outer panel are formed from the same type of light alloy. This enables, for example, galvanic corrosion (also known as electrolytic corrosion) to be suppressed from arising at the second join while achieving a weight reduction in the vehicle compared to cases in which the roof panel and the side outer panel are made from sheet steel.

A vehicle upper section structure of a third aspect of the present disclosure is the second aspect, wherein joining in the first join is by mechanical joining, and joining in the second join is by welding.

According to the third aspect, the roof side-rail and the side outer panel, which are formed from materials having different linear expansion coefficients to each other, are mechanically joined at the first join. Further, the roof panel and the side outer panel, which are formed from the same type of light alloy, are joined by welding at the second join. Thus, a mechanical join is employed for joining together the different types of materials at the first join, and a weld is employed for joining together the same types of materials at the second join, enabling appropriate join strength to be secured at each of the joins.

A vehicle upper section structure of a fourth aspect of the present disclosure is any one of the first aspect to the third aspect, wherein the roof side-rail includes a roof side-rail outer and a roof side-rail inner that are joined together, and only one out of the roof side-rail outer or the roof side-rail inner is joined at the first join.

According to the fourth aspect, only one out of the roof side-rail outer or the roof side-rail inner of the roof side-rail is joined at the first join of the side outer panel. Thus, joining is simpler than cases in which the side outer panel, the roof side-rail outer, and the roof side-rail inner are joined as three superimposed plies.

A vehicle upper section structure of a fifth aspect of the present disclosure is the fourth aspect, wherein the roof side-rail inner is formed by a sheet member having thinner sheet thickness than the roof side-rail outer and includes an extension portion that extends from a join of the roof side-rail inner joined to the roof side-rail outer, and the extension portion is joined at the first join.

According to the fifth aspect, the roof side-rail inner formed from a material having thinner sheet thickness than the roof side-rail outer includes an extension portion that extends from a join of the roof side-rail inner joined to the roof side-rail outer. Further, the extension portion is joined to the first join of the side outer panel. Thus, it is the roof side-rail inner of thin sheet thickness that is extended, enabling an increase in mass to be suppressed compared to cases in which it is the roof side-rail outer of thick sheet thickness that is extended.

A vehicle upper section structure of a sixth aspect of the present disclosure is any one of the first to the fifth aspect, wherein the side outer panel includes a first location in face-to-face contact with the roof panel, and the second join is provided at the first location.

In the sixth aspect, the second join of the side outer panel is provided at the first location of the side outer panel that is in face-to-face contact with the roof panel. This enables greater join strength than in cases in which the side outer panel and the roof panel are joined together in a state of point-contact or line-contact with each other.

A vehicle upper section structure of a seventh aspect of the present disclosure is any one of the first to the fifth aspect, wherein the side outer panel includes an inclined portion that slopes downward toward the inner side in the vehicle width direction, and a vehicle width direction end of the roof panel is joined to the second join provided at the inclined portion.

In the seventh aspect, the vehicle width direction end of the roof panel is joined to the inclined portion of the side outer panel. This enables vehicle width direction variation (dimensional error) in the relative positions of the side outer panel and the roof panel to be absorbed by the inclined portion when joining the roof panel to the second join of the side outer panel.

A vehicle upper section structure of an eighth aspect of the present disclosure is any one of the first to the seventh aspect, wherein the side outer panel is formed from a material having a higher coefficient of extension than the material of the roof panel.

According to the eighth aspect, the side outer panel is formed from a material having a higher coefficient of extension than the material of the roof panel, such that side outer panel is easier to press.

A vehicle upper section structure of a ninth aspect of the present disclosure is any one of the first to the eighth aspect, wherein a step that extends in a vehicle front-rear direction is formed at a second location of the side outer panel, and the second location is disposed between the first join and the second join.

In the ninth aspect, the step portion that extends in the vehicle front-rear direction is formed at the second location of the side outer panel, and the second location is disposed between the first join and the second join, such that this second location readily undergoes elastic deformation and readily absorbs the strain described above.

A vehicle upper section structure of a tenth aspect of the present disclosure is any one of the first to the ninth aspect, wherein the second join is disposed at an outer side of the first join in the vehicle width direction.

In the tenth aspect, the second join joining the roof panel and the side outer panel together is disposed at the outer side, in the vehicle width direction, of the first join joining the roof side-rail and the side outer panel together. This enables the first join to be covered and hidden from the vehicle outer side by the roof panel.

### BRIEF DESCRIPTION OF THE DRAWINGS

Exemplary Embodiments of the present disclosure will be described in detail based on the following figures, wherein:
Fig. 1 is a perspective view illustrating configuration of an upper section of a vehicle applied with a vehicle upper section structure according to a first exemplary embodiment of the present disclosure;
Fig. 2 is an enlarged cross-section view sectioned along line A-A in Fig. 1;
Fig. 3 is a cross-section view corresponding to Fig. 2 and illustrates a state before a roof panel is joined to a side outer panel;
Fig. 4 is a cross-section view corresponding to Fig. 2 and illustrates a first modified example of a vehicle upper section structure according to the first exemplary embodiment;
Fig. 5 is a cross-section view corresponding to Fig. 2 and illustrates a second modified example of a vehicle upper section structure according to the first exemplary embodiment;
Fig. 6 a cross-section view corresponding to Fig. 2 and illustrates a vehicle upper section structure according to a second exemplary embodiment of the present disclosure;
Fig. 7 is a cross-section view corresponding to Fig. 6 and illustrates a state before a roof panel is joined to a side outer panel; and
Fig. 8 is a cross-section view corresponding to Fig. 7 and illustrates a modified example of a vehicle upper section structure according to the second exemplary embodiment.

### DETAILED DESCRIPTION

### First Exemplary Embodiment

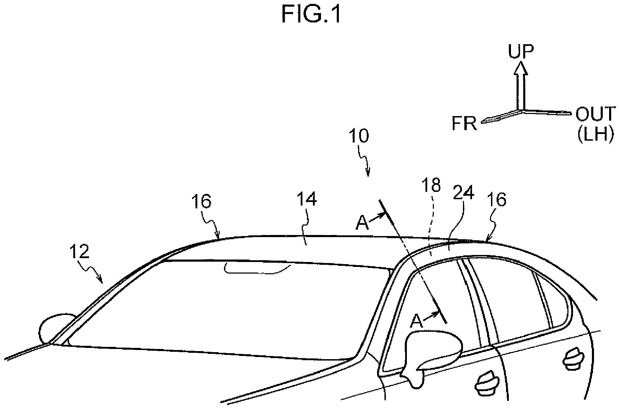

Explanation follows regarding a vehicle upper section structure 10 according to a first exemplary embodiment of the present disclosure, with reference to Fig. 1 to Fig. 5. Note that in each of the drawings, the arrow FR, the arrow UP, and the arrow OUT (LH) respectively indicate the vehicle front (direction of progression), upward, and outward in the vehicle width direction (vehicle left) as appropriate. In the following, unless specifically stated otherwise, simple reference to front and rear, left and right, and up and down directions indicate front and rear in a vehicle front-rear direction, left and right in a vehicle left-right direction (vehicle width direction), and up and down in a vehicle vertical direction.

### Configuration

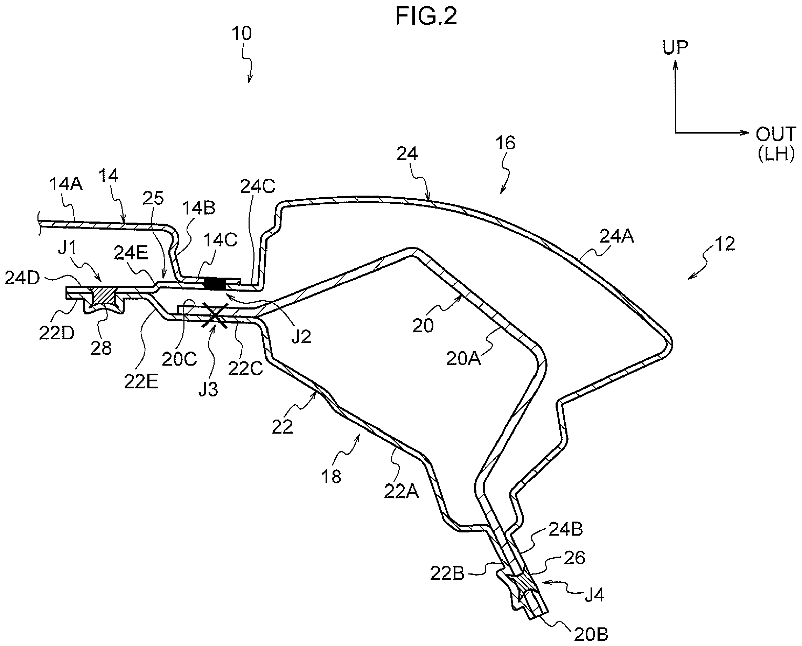

As illustrated in Fig. 1 and Fig. 2, the vehicle upper section structure 10 according to the present exemplary embodiment includes a roof panel 14 provided at a vehicle width direction central portion of an upper section of a vehicle (automobile) 12, and a pair of left and right roof side-sections 16 provided at the two vehicle width direction sides of the roof panel 14. Each roof side-section 16 includes a roof side-rail 18 provided at a vehicle width direction end of the vehicle upper section, and a side outer panel 24 that covers the roof side-rail 18 from the vehicle outer side. Note that since the upper section of the vehicle 12 according to the present exemplary embodiment is configured with left-right symmetry, the following description will primarily be regarding configuration of the left side of the upper section of the vehicle 12.

The roof side-rails 18 extend in the vehicle front-rear direction and configure framework of a vehicle body. As illustrated in Fig. 2, each roof side-rail 18 includes a roof side-rail outer 20 and a roof side-rail inner 22 that are joined together to form a closed cross-section extending in the vehicle front-rear direction.

The roof side-rail outer 20 is formed by pressing a metal sheet (sheet steel in this case), and has a substantially hat shaped cross-section profile open toward the vehicle width direction inner side and vehicle lower side as viewed from the vehicle front-rear direction. Specifically, the roof side-rail outer 20 includes a main body 20A that forms a substantially U-shaped cross-section profile open toward the vehicle width direction inner side and vehicle lower side, an outer flange 20B that extends from the open end at the vehicle width direction outer side of the main body 20A toward the vehicle lower side and slightly toward the vehicle width direction outer side, and an inner flange 20C that extends horizontally or substantially horizontally from the open end at the vehicle width direction inner side of the main body 20A toward the vehicle width direction inner side.

The roof side-rail inner 22 is formed by pressing a metal sheet (sheet steel in this case) having a sheet thickness thinner than the sheet steel configuring the roof side-rail outer 20, and the roof side-rail inner 22 is disposed further to the inner side of the vehicle (vehicle lower side and vehicle width direction inner side) than the roof side-rail outer 20. The roof side-rail inner 22 includes an inclined main body 22A that slopes downward toward the outer side in the vehicle width direction. The main body 22A faces the main body 20A of the roof side-rail outer 20 from the vehicle lower side and vehicle width direction inner side, and closes off the opening of the main body 20A.

An outer flange 22B extends from a vehicle width direction outer end of the main body 22A toward the vehicle lower side and slightly toward the vehicle width direction outer side. Further, an inner flange 22C extends horizontally or substantially horizontally from a vehicle width direction inner end of the main body 22A toward the vehicle width direction inner side. Moreover, an extension flange 22D extends horizontally or substantially horizontally from a vehicle width direction inner end of the inner flange 22C toward the vehicle width direction inner side. A step 22E is formed between the extension flange 22D and the inner flange 22C, with the step 22E being bent in substantially a crank shape as viewed from the vehicle front-rear direction. The step 22E extends in the vehicle front-rear direction, and the extension flange 22D is disposed slightly further to the vehicle upper side than the inner flange 22C. The extension flange 22D corresponds to an "extension portion" of the present disclosure.

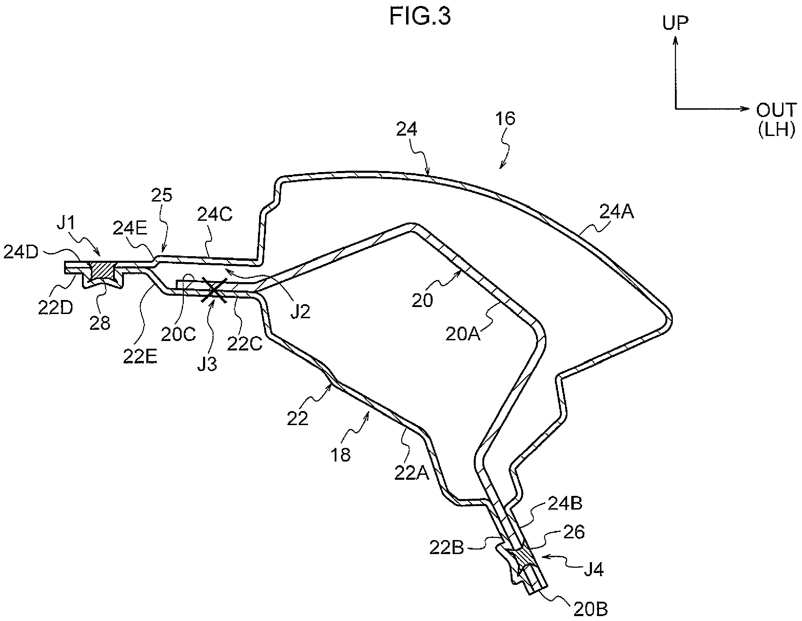

The inner flange 20C of the roof side-rail outer 20 is superimposed on the inner flange 22C of the roof side-rail inner 22 from the vehicle upper side. The inner flanges 20C, 22C are joined together by a method such as welding (spot welding in this case) (see inside join J3 in Fig. 2 and Fig. 3). Further, the outer flange 20B of the roof side-rail outer 20 is superimposed on the outer flange 22B of the roof side-rail inner 22 from the vehicle width direction outer side. The outer flanges 20B, 22B are joined together by rivets 26, described later. A closed cross-section extending in the vehicle front-rear direction is thereby formed by the main body 20A of the roof side-rail outer 20 and the main body 22A of the roof side-rail inner 22,

The roof panel 14 spans between the left and right roof side-sections 16, and is disposed at the inner side of the roof side-rails 18 in the vehicle width direction. The roof panel 14 is formed by pressing a sheet member formed of a material (an aluminum alloy in this case) having a higher linear expansion coefficient than the material (sheet steel in this case) of the roof side-rail 18, and configures a styling face on the vehicle outer side of the ceiling of the vehicle cabin.

The roof panel 14 includes a main body 14A that covers the vehicle cabin from the vehicle upper side. The main body 14A is formed with a gently curving profile forming a convex shape on the vehicle upper side. Drop portions 14B pointing toward the vehicle lower side extend perpendicularly or substantially perpendicularly from vehicle width direction ends of the main body 14A. A roof-side flange 14C pointing toward the vehicle width direction outer side extends horizontally or substantially horizontally from a lower end of each drop portion 14B. The roof-side flange 14C is disposed at the vehicle upper side (directly above) the inner flange 20C of the roof side-rail outer 20, and faces the inner flange 20C across a gap.

The side outer panel 24 is formed by pressing a sheet member formed from a material (an aluminum alloy in this case) having a higher linear expansion coefficient than the material (sheet steel in this case) of the roof side-rail 18, and forms a styling face of the vehicle side-section. Namely, the side outer panel 24 is formed from the same type of light alloy as the material of the roof panel 14. Note that in the present exemplary embodiment, "same type of light alloy" indicates that there is a common main light metal configuring the light alloys. Further, the material of the roof panel 14 and the side outer panel 24 may be aluminum alloys (light alloys) of the same type or may be of different types. An example of a configuration of the same type of aluminum alloy is a configuration employing Al-Mg-Si based aluminum alloys. Further, an example of a configuration of different types is a configuration in which the material of the roof panel 14 is an Al-Mg-Si based aluminum alloy and the material of the side outer panel 24 is an Al-Li based aluminum alloy.

The side outer panel 24 is disposed further to the vehicle outer side (vehicle upper side and vehicle width direction outer side) than the roof side-rail 18. The side outer panel 24 has a substantially hat shaped cross-section profile open toward the vehicle width direction inner side and vehicle lower side as viewed from the vehicle front-rear direction. The side outer panel 24 includes a main body 24A formed with a substantially U-shaped cross-section profile open toward the vehicle width direction inner side and vehicle lower side. The main body 20A of the roof side-rail outer 20 is housed inside the main body 24A. An outer flange 24B extends from the open end at the vehicle width direction outer side of the main body 24A toward the vehicle lower side and slightly toward the vehicle width direction outer side. Further, an inner flange 24C extends horizontally or substantially horizontally from the open end at the vehicle width direction inner side of the main body 24A toward the vehicle width direction inner side. Moreover, an extension flange 24D extends horizontally or substantially horizontally from a vehicle width direction inner end of the inner flange 24C toward the vehicle width direction inner side. A step 24E is formed between the extension flange 22D and the inner flange 24C, with the step 24E being bent in a crank shape as viewed from the vehicle front-rear direction. The step 24E extends in the vehicle front-rear direction, and the extension flange 24D is positioned slightly toward the vehicle lower side of the inner flange 24C. The step 24E corresponds to a "step" of the present disclosure.

The outer flange 24B of the side outer panel 24 is superimposed on the outer flange 20B of the roof side-rail outer 20 from the vehicle width direction outer side. The outer flanges 20B, 24B and the outer flange 22B of the roof side-rail inner 22 are in a 3-ply superimposed state. The outer flanges 20B, 22B, 24B are mechanically joined together by non-penetrating rivets 26 (see outside join J4 illustrated in Fig. 2 and Fig. 3).

The extension flange 24D of the side outer panel 24 is superimposed on the extension flange 22D of the roof side-rail inner 22 from the vehicle upper side. The extension flanges 22D, 24D are mechanically joined together by non-penetrating rivets 28. Namely, the side outer panel 24 is provided with a join J1 (referred to as first join J1 hereafter) joined to the roof side-rail 18. The first join J1 is configured with, out of the roof side-rail outer 20 or the roof side-rail inner 22 configuring the roof side-rail 18, only the roof side-rail inner 22 joined at the first join J1.

Further, the inner flange 24C of the side outer panel 24 is superimposed on the roof-side flange 14C of the roof panel 14 from the vehicle lower side. The inner flange 24C and the roof-side flange 14C are joined together by welding (laser welding in this case). Namely, the side outer panel 24 is provided with a join J2 (referred to as second join J2 hereafter) joined to the roof panel 14, in a configuration in which the roof panel 14 is joined only to the side outer panel 24. Further, the inner flange 24C provided with the second join J2 is in face-to-face contact with the roof-side flange 14C of the roof panel 14. More specifically, the inner flange 24C and the roof-side flange 14C are formed in a flat plate shape along the vehicle horizontal direction, and are joined together in a state of face-to-face contact with each other. Namely, the present exemplary embodiment is configured with the side outer panel 24 provided with a flat portion (inner flange 24C) extending flatly along the vehicle horizontal direction, and the roof-side flange 14C configuring the vehicle width direction end of the roof panel 14 superimposed on and joined to the flat portion. The inner flange 24C corresponds to a "location in face-to-face contact with the roof panel" in the present disclosure.

In the side outer panel 24, the first join J1 and the second join J2 are separated from each other. Specifically, the second join J2 is disposed at the vehicle width direction outer side of the first join J1, and is disposed separated to the vehicle upper side (directly above) of the inner flange 20C of the roof side-rail outer 20. A location of the side outer panel 24 between the first join J1 and the second join J2 configures a strain absorber 25. The strain absorber 25 is configured by a vehicle width direction inner side location of the inner flange 24C, the step 24E, and a vehicle width direction outer side location of the extension flange 24D. The strain absorber 25 has a plate shape with a cross-section bent into a substantially crank shape. The strain absorber 25 extends along the vehicle width direction as viewed along the vehicle front-rear direction. The strain absorber 25 includes a location in contact with neither the roof side-rail 18 nor the roof panel 14, and spaces are formed at both the upper and lower side of the strain absorber 25 to permit the strain absorber 25 to undergo elastic deformation.

Note that to manufacture the upper section of the vehicle 12 applied with the vehicle upper section structure 10 configured as described above, as illustrated in Fig. 3, the roof side-section 16 is manufactured by joining the roof side-rail 18 and the side outer panel 24 together at the outside join J4 and at the first join J1, and then the side outer panel 24 and the roof panel 14 are joined at the second join J2 to give the state illustrated in Fig. 2. Then, a non-illustrated roof molding is fitted between the drop portion 14B of the roof panel 14 and the main body 24A of the side outer panel 24 to achieve a configuration in which the second join J2 is covered by the roof molding.

### Operation and Advantageous Effects

Explanation follows regarding operation and advantageous effects of the first exemplary embodiment.

In the vehicle upper section structure 10 configured as described above, the roof panel 14 and the side outer panel 24 are formed by aluminum alloy, this being a material having a higher linear expansion coefficient than the sheet steel material of the roof side-rail 18. The side outer panel 24 made of aluminum alloy (abbreviated to "aluminum" hereafter) includes the first join J1 joined to the roof side-rail 18 made from sheet steel and the second join J2 joined to the roof panel 14 made of aluminum. The first join J1 and the second join J2 are separated from each other. Namely, the aluminum roof panel 14 is indirectly connected to the sheet-steel roof side-rail 18 through the aluminum side outer panel 24. This enables strain occurring in the aluminum roof panel 14 due to the different linear expansion coefficients of aluminum and steel to be absorbed by the aluminum side outer panel 24.

Specifically, in the side outer panel 24, the strain absorber 25 provided between the first join J1 and the second join J2 includes a location that is in contact with neither the roof panel 14 nor the roof side-rail 18, and the strain in the roof panel 14 is absorbed by the strain absorber 25 undergoing deformation within its elasticity range. This enables the strain in the roof panel 14 to be reduced, enabling plastic deformation of the roof panel 14 to be prevented or effectively suppressed even in cases, such as that described in BACKGROUND, in which a bead is not formed at the vehicle width direction end of the roof panel 14.

Further, in the present exemplary embodiment, the roof panel 14 and the side outer panel 24 are formed from the same type of light alloy (aluminum alloy). This enables, for example, galvanic corrosion (also known as electrolytic corrosion) to be suppressed from arising at the second join J2 while still achieving a weight reduction in the vehicle 12 compared to cases in which the roof panel 14 and the side outer panel 24 are made from sheet steel.

Further, in the present exemplary embodiment, at the first join J1, the roof side-rail 18 and the side outer panel 24 formed from materials having different linear expansion coefficients from each other are mechanically joined together by rivets 28. Further, at the second join J2, the roof panel 14 and the side outer panel 24 formed from the same type of light alloys as each other are joined by laser welding. Thus, a mechanical join is employed to join the different types of materials together at the first join J1, and a weld is employed to join the same types of materials together at the second join J2, enabling appropriate join strength to be secured at each of the joins J1, J2.

Moreover, in the present exemplary embodiment, the roof side-rail 18 includes the roof side-rail outer 20 and the roof side-rail inner 22 that are joined together, yet only the roof side-rail inner 22 is joined to the side outer panel 24 at the first join J1. Thus, joining is simpler than cases in which the side outer panel 24, the roof side-rail outer 20, and the roof side-rail inner 22 are joined together as three superimposed plies, facilitating greater join strength.

Further, in the present exemplary embodiment, the roof side-rail inner 22 formed by a sheet steel having thinner sheet thickness than that of the roof side-rail outer 20 includes the extension flange 22D extending from the inner flange 22C, which is joined to the roof side-rail outer 20. The extension flange 22D is joined to the first join J1 of the side outer panel 24. Thus, it is the roof side-rail inner 22 of thin sheet thickness that is extended, such that an increase in mass can be suppressed compared to cases in which it is the roof side-rail outer 20 of thick sheet thickness that is extended.

Further, in the present exemplary embodiment, the second join J2 of the side outer panel 24 is provided with the inner flange 24C that is in face-to-face contact with the roof-side flange 14C of the roof panel 14. This enables greater join strength to be achieved than in cases in which the side outer panel 24 and the roof panel 14 are joined together in a state of point-contact or line-contact with each other.

Moreover, in the present exemplary embodiment, the step 24E extending in the vehicle front-rear direction is formed in the strain absorber 25 of the side outer panel 24. Accordingly, the strain absorber 25 undergoes elastic deformation more readily and so the strain described above is more readily absorbed by the strain absorber 25.

Further, in the present exemplary embodiment, in the side outer panel 24, the second join J2 joined to the roof panel 14 is disposed further to the vehicle width direction outer side than the first join J1 joined to the roof side-rail 18. Thus, the first join J1 is covered from the vehicle outer side by the roof panel 14, such that a configuration to cover and conceal the first join J1 is rendered unnecessary.

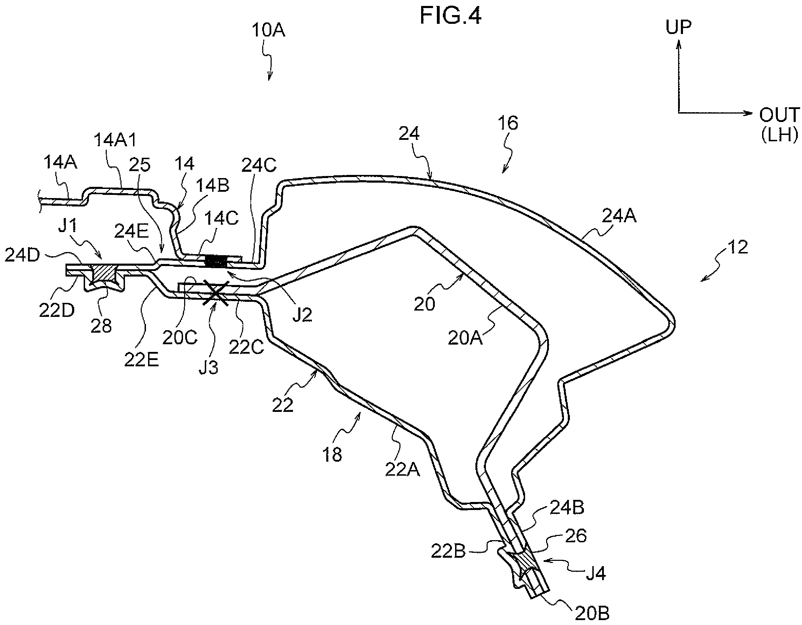

Note that the first exemplary embodiment has a configuration in which a bead is not formed at the vehicle width direction end of the roof panel 14; however, the present disclosure is not limited thereto. Namely, as in the vehicle upper section structure 10A (first modified example) illustrated in Fig. 4, for example, configuration may be made in which a bead 14A1 is formed at the vehicle width direction end of a main body 14A of the roof panel 14. The bead 14A1 forms a protrusion toward the vehicle upper side, and is formed with an inverted U-shaped cross-section profile open toward the vehicle lower side as viewed from the vehicle front-rear direction. Although the bead 14A1 forms a protrusion toward the vehicle upper side, the projection amount toward the vehicle upper side is set so as to be small (the bead 14A1 has a shallow profile). In the first modified example, the bead 14A1 is able to reinforce the roof panel 14, enabling an improvement in the advantageous effect of preventing or suppressing plastic deformation of the roof panel 14. Moreover, the bead 14A1 has a shallow profile, enabling any adverse impact on styling to be reduced.

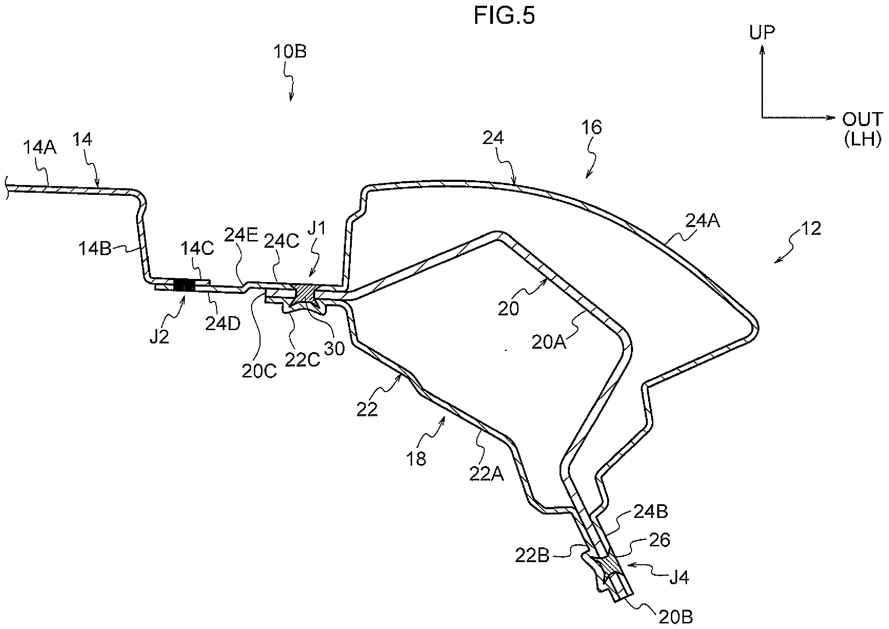

Further, in the first exemplary embodiment described above, configuration is such that the second join J2 is disposed at the vehicle width direction outer side of the first join J1; however, the present disclosure is not limited thereto. Namely, as in the vehicle upper section structure 10B (second modified example) illustrated in Fig. 5, for example, configuration may be made in which the second join J2 is disposed inside the first join J1 in the vehicle width direction. In the second modified example, the inner flange 24C of the side outer panel 24, the inner flange 20C of the roof side-rail outer 20, and the roof side-rail inner 22 are superimposed together in a 3-ply superimposed state, and are mechanically joined together by non-penetrating rivets 30. The first join J1 joined to the roof side-rail 18 is thus formed at the inner flange 24C of the side outer panel 24. Note that in the second modified example, the roof side-rail inner 22 is configured without the extension flange 22D according to the first exemplary embodiment.

Further, in the second modified example, the extension flange 24D of the side outer panel 24 and the roof-side flange 14C of the roof panel 14 are superimposed together in a 2-ply superimposed state, and are joined together by welding (laser welding in this case), The second join J2 joined to the roof panel 14 is thus formed at the extension flange 24D of the side outer panel 24. In the second modified example, a non-illustrated roof molding is fitted between the drop portion 14B of the roof panel 14 and the main body 24A of the side outer panel 24, in a configuration such that the joins J1, J2 are covered by the roof molding. In the second modified example also, the joins J1, J2 are separated from each other, enabling plastic deformation of the roof panel 14 to be prevented or effectively suppressed, similarly to in the first exemplary embodiment.

### Second Exemplary Embodiment

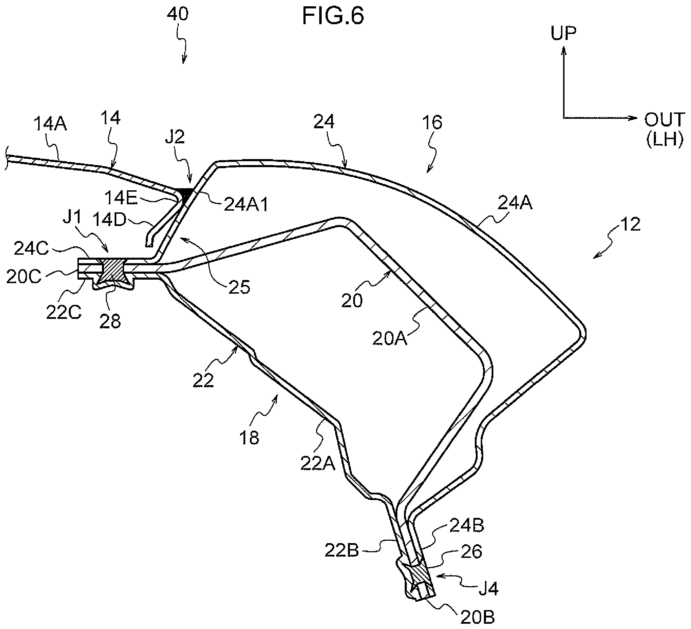

Explanation follows regarding a second exemplary embodiment of the present disclosure, with reference to Fig. 6 to Fig. 8. Note that configuration and operation that is basically the same as that of the first exemplary embodiment are appended with the same reference signs as in the first exemplary embodiment, and explanation thereof is omitted.

Fig. 6 is a cross-section view corresponding to Fig. 2 and illustrates a vehicle upper section structure 40 according to the second exemplary embodiment of the present disclosure. In the present exemplary embodiment, the inner flange 24C of the side outer panel 24, the inner flange 20C of the roof side-rail outer 20, and the roof side-rail inner 22 are superimposed together in a 3-ply superimposed state, and are mechanically joined together by non-penetrating rivets 28. Thus, the first join J1 joined to the roof side-rail 18 is formed at the inner flange 24C of the side outer panel 24. Note that in the present exemplary embodiment, the roof side-rail inner 22 is configured without the extension flange 22D according to the first exemplary embodiment.

Further, in the present exemplary embodiment, a wall at the vehicle width direction inner side of the main body 24A of the side outer panel 24 configures an inclined portion (inclined wall) 24A1 that slopes downward toward the inner side in the vehicle width direction. Further, a folded back portion 14D is formed at a vehicle width direction end of the roof panel 14, with the folded back portion 14D folded back toward the vehicle lower side and vehicle width direction inner side. The folded back portion 14D is set with an angle of inclination to the vehicle horizontal direction that is smaller than that of the inclined portion 24A1. A bent portion 14E formed between the folded back portion 14D and the main body 14A contacts a vertical direction intermediate portion of the inclined portion 24A1 from the vehicle width direction inner side. The bent portion 14E is joined to the inclined portion 24A1 by a weld (filler welding; tungsten inert gas welding in this case). Thus, the second join J2 joined to the roof panel 14 is formed at the side outer panel 24.

In the present exemplary embodiment, the second join J2 is disposed at the vehicle width direction outer side and vehicle upper side of the first join J1, and the first join J1 and the second join J2 are separated from each other. A location of the side outer panel 24 between the first join J1 and the second join J2 configures the strain absorber 25. The strain absorber 25 is configured at a location that is at a vehicle lower side of the inclined portion 24A1 and at the vehicle width direction outer side location of the inner flange 24C. The strain absorber 25 has a plate shape with a cross-section profile bent in a substantially L-shape. The strain absorber 25 includes a location that is in contact with neither the roof side-rail 18 nor the roof panel 14.

Further, in the present exemplary embodiment, the side outer panel 24 is formed from a material having a higher coefficient of extension than that of the material of the roof panel 14. Specifically, the roof panel 14 is formed from an Al-Mg-Si based aluminum alloy, and the side outer panel 24 is formed from an Al-Li based aluminum alloy.

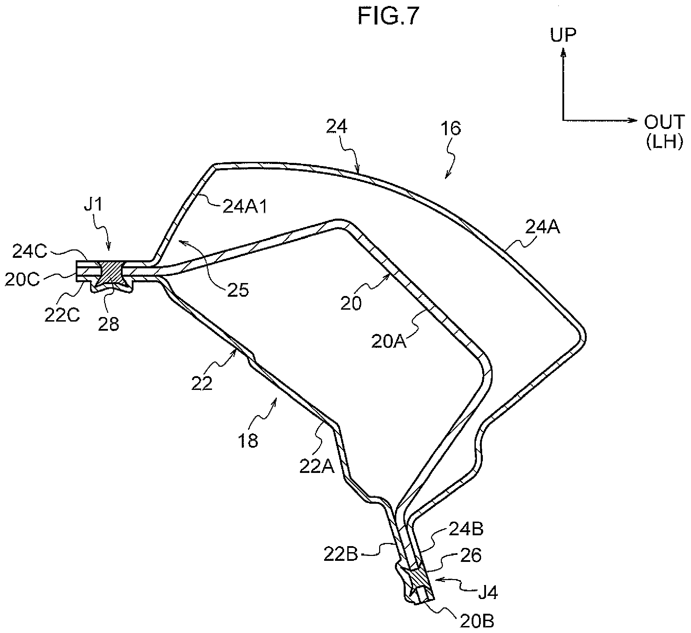

Note that to manufacture the upper section of the vehicle 12 applied with the vehicle upper section structure 40 configured as described above, as illustrated in Fig. 7, the roof side-section 16 is manufactured by joining the roof side-rail 18 and the side outer panel 24 together at the outside join J4 and at the first join J1, and then the side outer panel 24 and the roof panel 14 are joined at the second join J2 to give the state illustrated in Fig. 6. In the present exemplary embodiment, configuration other than that described above is the same as that in the first exemplary embodiment.

In the present exemplary embodiment, the aluminum roof panel 14 is indirectly connected to the sheet-steel roof side-rail 18 through the aluminum side outer panel 24. This enables strain occurring in the aluminum roof panel 14 due to the different linear expansion coefficients of aluminum and steel to be absorbed by the aluminum side outer panel 24. As a result, this enables strain in the roof panel 14 to be reduced, enabling plastic deformation of the roof panel 14 to be prevented or effectively suppressed even in cases in which a bead, such as that described in BACKGROUND, is not formed at the vehicle width direction end of the roof panel 14.

Moreover, in the present exemplary embodiment, when the roof panel 14 expands or contracts due to heat, the main body 24A of the side outer panel 24 undergoes elastic deformation as a whole in the vehicle width direction, permitting such expansion or contraction. This enables the advantageous effects of preventing or suppressing plastic deformation in the roof panel 14 to be raised.

Further, in the present exemplary embodiment, the side outer panel 24 is formed with the inclined portion 24A1 that slopes downward toward the inner side in the vehicle width direction, and the vehicle width direction end of the roof panel 14 (bent portion 14E) is joined at the second join J2 provided on the inclined portion 24A1. This enables vehicle width direction variation (dimensional error) in the relative positions of the side outer panel 24 and the roof panel 14 to be absorbed when joining the vehicle width direction end of the roof panel 14 to the second join J2 of the side outer panel 24. Moreover, the roof molding according to the first exemplary embodiment (not illustrated in the drawings) is rendered unnecessary, enabling what is known as a molding free roof structure to be achieved, and enabling styling of the vehicle 12 to be improved.

Moreover, in the present exemplary embodiment, the roof panel 14 is formed from an Al-Mg-Si based aluminum alloy having excellent strength and corrosion resistance, and the side outer panel 24 is formed from an Al-Li based aluminum alloy having a higher coefficient of extension than the material of the roof panel 14. Thus, the side outer panel 24 is more easily pressed. Further, the strain absorber 25 of the side outer panel 24 more readily undergoes elastic deformation, and the strain described above is more readily absorbed.

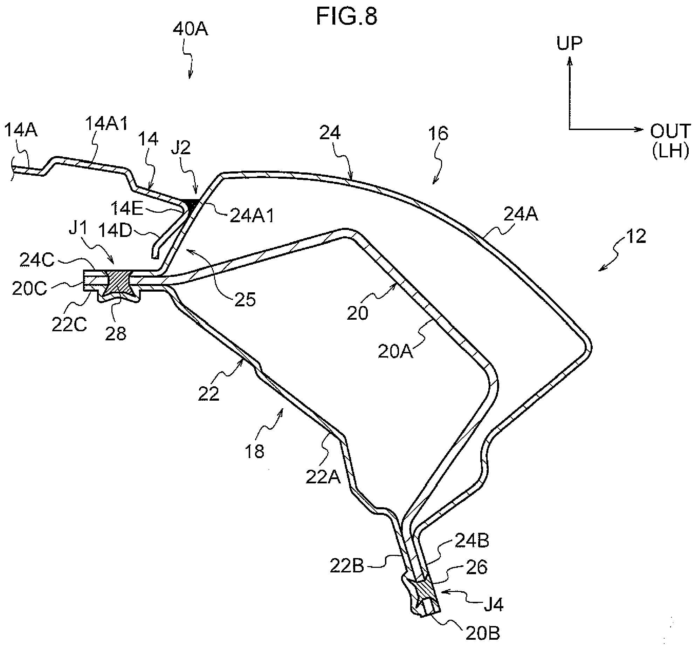

Note that in the second exemplary embodiment, configuration is made in which a bead is not formed at the vehicle width direction end of the roof panel 14; however, the present disclosure is not limited thereto. Namely, as in the vehicle upper section structure 40A (modified example) illustrated in Fig. 8, for example, the roof panel 14 may be configured with a bead 14A1 formed on the vehicle width direction end of the main body 14A. The bead 14A1 is configured similarly to the bead 14A1 (see Fig. 4) of the vehicle upper section structure 10A according to the first modified example of the first exemplary embodiment, and therefore obtains advantageous effects similar to that of the first modified example.

Further, in each of the above exemplary embodiments, the joining at the first join J1 is configured by mechanically joining using the rivets 28, 30. However, the present disclosure is not limited thereto, and joining at the first join may be performed, for example, by employing bolts, fasteners, and so on.

Further, each of the above exemplary embodiments is configured with the roof panel 14 and the side outer panel 24 formed by an aluminum alloy. However, the present disclosure is not limited thereto, and the material of the roof panel 14 and the side outer panel 24 may be modified as appropriate. For example, the roof panel 14 and the side outer panel 24 may be formed by a magnesium alloy.

The first exemplary embodiment is configured with the step 24E formed at the strain absorber 25 of the side outer panel 24. However, the present disclosure is not limited thereto, and the step 24E may be omitted. Further, instead of the step 24E, a bend portion such as a bead may be formed along the vehicle front-rear direction.

Further, the first exemplary embodiment is configured with the roof side-rail inner 22 joined to the first join J1 of the side outer panel 24. However, the present disclosure is not limited thereto, and a roof side-rail outer may be joined to a first join of a side outer panel.

Various other modifications may be implemented within a range not departing from the spirit of the invention. Obviously, the scope of rights encompassed by the present disclosure is not limited to the exemplary embodiments described above.

## Claims

1. A vehicle upper section structure comprising:
a roof side-rail that is provided at a vehicle width direction end of a vehicle upper section;
a roof panel that is formed from a material having a higher linear expansion coefficient than that of a material of the roof side-rail, and that is provided at a vehicle width direction central portion of the vehicle upper section; and
a side outer panel that is formed from a material having a higher linear expansion coefficient than that of the material of the roof side-rail, that is provided at an outer side of a vehicle further than the roof side-rail, and that includes a first join joined to the roof side-rail and a second join joined to the roof panel, with the first join and the second join being separated from each other.

2. The vehicle upper section structure of claim 1, wherein the roof panel and the side outer panel are formed from the same type of light alloy.

3. The vehicle upper section structure of claim 2 wherein joining in the first join is by mechanical joining, and joining in the second join is by welding.

4. The vehicle upper section structure of any one of claim 1 to claim 3, wherein:
the roof side-rail includes a roof side-rail outer and a roof side-rail inner that are joined together; and
only one out of the roof side-rail outer or the roof side-rail inner is joined at the first join.

5. The vehicle upper section structure of claim 4, wherein the roof side-rail inner is formed by a sheet member having thinner sheet thickness than the roof side-rail outer and includes an extension portion that extends from a join of the roof side-rail inner joined to the roof side-rail outer, and the extension portion is joined at the first join.

6. The vehicle upper section structure of any one of claim 1 to claim 5, wherein the side outer panel includes a first location in face-to-face contact with the roof panel, and the second join is provided at the first location.

7. The vehicle upper section structure of any one of claim 1 to claim 5, wherein the side outer panel includes an inclined portion that slopes downward toward an inner side in the vehicle width direction, and a vehicle width direction end of the roof panel is joined to the second join provided at the inclined portion.

8. The vehicle upper section structure of any one of claim 1 to claim 7, wherein the side outer panel is formed from a material having a higher coefficient of extension than the material of the roof panel.

9. The vehicle upper section structure of any one of claim 1 to claim 8, wherein a step that extends in a vehicle front-rear direction is formed at a second location of the side outer panel, and the second location is disposed between the first join and the second join.

10. The vehicle upper section structure of any one of claim 1 to claim 9, wherein the second join is disposed at an outer side of the first join in the vehicle width direction.

11. The vehicle upper section structure of any one of claim 1 to claim 3, wherein:
the roof side-rail includes a roof side-rail outer and a roof side-rail inner that are joined together; and
the side outer panel, the roof side-rail outer, and the roof side-rail inner are superimposed together in a 3-ply superimposed state, and the first join is provided at a superimposed location.

12. The vehicle upper section structure of any one of claim 1 to claim 11, wherein a bead is formed at a vehicle width direction end of the roof panel, and the bead is formed with an inverted U-shaped cross-section profile so as to form a protrusion toward a vehicle upper side and open toward a vehicle lower side as viewed from a vehicle front-rear direction.
